# EUROPÄISCHE PATENTSCHRIFT

(11) **EP 2 147 388 B1**
(45) Veröffentlichungstag und Bekanntmachung des Hinweises auf die Patenterteilung: **05.06.2013**
(21) Anmeldenummer: 08735549.1
(22) Anmeldetag: 28.03.2008
(51) Int. Cl.: G06F 21/62

(54) **COMPUTERSYSTEM UND VERFAHREN ZUR SPEICHERUNG VON DATEN**
COMPUTER SYSTEM AND METHOD FOR STORING DATA
SYSTÈME INFORMATIQUE ET PROCÉDÉ DE MÉMORISATION DE DONNÉES

(30) Priorität: 17.04.2007 DE 102007018403
(43) Veröffentlichungstag der Anmeldung: 27.01.2010
(73) Patentinhaber: VITA-X AG, 56070 Koblenz (DE)
(72) Erfinder: RODORFF, Werner, 56170 Bendorf-Sayn (DE)
(74) Vertreter: Richardt Patentanwälte GbR
(86) Internationale Anmeldenummer: PCT/EP2008/053705
(87) Internationale Veröffentlichungsnummer: WO 2008/125455

(56) Entgegenhaltungen:
- EP-A- 1 650 630
- WO-A-98/47259
- US-A1- 2001 042 204
- US-A1- 2005 018 842
- SCHNEIER B ED - SCHNEIER B: "Applied Cryptography, PASSAGE" APPLIED CRYPTOGRAPHY. PROTOCOLS, ALGORITHMS, AND SOURCE CODE IN C, NEW YORK, JOHN WILEY & SONS, US, 1. Januar 1996 (1996-01-01), Seiten 173-182, XP002276805 ISBN: 978-0-471-11709-4
- LUC BOUGANIM ET AL: "Chip-Secured Data Access: Confidential Data on Untrusted Servers" PROCEEDINGS OF THE INTERNATIONAL CONFERENCE ON VERY LARGEDATA BASES, XX, XX, 1. Januar 2002 (2002-01-01), Seiten 1-12, XP002427422
- MAURER W D ET AL: "HASH TABLE METHODS" ACM COMPUTING SURVEYS, ACM, NEW YORK, NY, US, US, Bd. 7, Nr. 1, 1. März 1975 (1975-03-01), Seiten 5-19, XP009022942 ISSN: 0360-0300

## Beschreibung

Die Erfindung betrifft ein Verfahren zur Erzeugung eines Schlüssels zur Verschlüsselung und/oder Entschlüsselung von Daten, einen tragbaren Datenträger mit Prozessor, eine Datenverarbeitungsvorrichtung sowie ein Computerprogrammprodukt.

Aus dem Stand der Technik sind verschiedene Arten von Chipkarten bekannt. Einen allgemeinen Überblick über Chipkarten gibt dabei das "Handbuch der Chipkarten", Wolfgang Rankl, Wolfgang Effing, Carl Hanser Verlag, 1999.

Ein Anwendungsbereich von Chipkarten ist die Verwendung als elektronische Gesundsheitskarte, welche in Zukunft die Krankenversichertenkarte in Deutschland ersetzen soll. Die Problematik ist dabei jedoch, dass Chipkarten im Allgemeinen eine relativ begrenzte Speicherkapazität aufweisen. Vorzugsweise bietet es sich daher an, auf der Chipkarte lediglich den Namen, den Wohnort des Patienten, dessen Krankenversicherung sowie einige wenige andere Daten zu speichern, welche nur einen geringen Speicherplatz benötigen.

Um hingegen weitere umfangreiche Patientendaten wie z. B. Röntgenbilder, Diagnosedaten und ähnliches über die elektronische Gesundheitskarte verfügbar zu machen, wurde hierzu die Verwendung von zusätzlichen Massenspeichermedien in Verbindung mit der elektronischen Gesundheitskarte vorgeschlagen. Beispielsweise offenbart die EP 0 781 428 B1 den zusätzlichen Einsatz eines Massenspeichermediums, wobei sich hier der Nachteil ergibt, dass der Patient neben seiner elektronischen Gesundheitskarte das Massenspeichermedium, beispielsweise bei einem Arztbesuch, mit sich führen muss.

Weitere Anwendungen von Chipkarten für Patientendaten sind aus den WO 03/034294 A2, WO 02/07040 A1 und WO 01/06468 A1 bekannt.

Die DE 10 2004 051 296 B3 offenbart ein Computersystem, welches unter Verwendung eines Datenservers und eines Verzeichnisservers zentral Patientendaten speichert. Die Patientendaten werden verschlüsselt auf dem Datenserver abgelegt und der Verzeichnisserver dient dazu, unter Verwendung einer Chipkarte auf die verschlüsselten Daten des Datenservers zuzugreifen.

Die US 2003/0081787 A1 offenbart ein Sicherheitsmodul um die Schlüsselverwaltung für verschlüsselte Dateien zu verbessern, wobei die Schlüsselverwaltung auf der rekursiven Erzeugung von Schlüsseln beruht.

Der Erfindung liegt demgegenüber die Aufgabe zugrunde, ein verbessertes Verfahren zur Speicherung und Abfrage von Daten, dazu benötigte verbesserte Datenträger mit Prozessor, eine verbesserte Datenverarbeitungsvorrichtung, sowie entsprechende verbesserte Computerprogrammprodukte zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Erzeugung eines ersten Schlüssels zur Verschlüsselung und/oder Entschlüsselung von Daten und eines ersten Zeigers geschaffen, wobei die Daten auf einem ersten Datenverarbeitungssystem in einem durch den ersten Zeiger identifizierten Speicherbereich gespeichert und/oder speicherbar sind. Das Verfahren umfasst die Schritte der rekursiven Erzeugung des ersten Schlüssels aus einem zweiten Schlüssel sowie der rekursiven Erzeugung des ersten Zeigers aus einem zweiten Zeiger. Dabei ist die Anzahl der Rekursionen für die Durchführung der rekursiven Erzeugung des ersten Schlüssels und des ersten Zeigers durch einen Indexwert festgelegt.

Die rekursive Erzeugung des ersten Schlüssels aus dem zweiten Schlüssel und die rekursive Erzeugung des ersten Zeigers aus dem zweiten Zeiger umfasst die Schritte der Erzeugung des ersten Schlüssels unter Verwendung des zweiten Schlüssels und eines dritten Schlüssels und die Erzeugung des ersten Zeigers unter Verwendung des zweiten Zeigers und eines vierten Schlüssels. Ferner werden die folgenden weiteren Schritte durchgeführt, wobei diese weiteren Schritte eine Anzahl oft wiederholt werden, welche dem Indexwert entspricht: Es wird ein neuer erster Schlüssels unter Verwendung des zuvor erzeugten ersten Schlüssels und des zweiten Schlüssels erzeugt, und es wird ein neuer erster Zeiger unter Verwendung des zuvor erzeugten ersten Zeigers und des vierten Schlüssels erzeugt.

Das erfindungsgemäße Verfahren zur Erzeugung des ersten Schlüssels und des ersten Zeigers hat den Vorteil, dass eine beliebige Anzahl von Schlüsseln und Zeigern generiert und zur Verschlüsselung und Speicherung von Daten verwendet werden kann. Da sich jeder verwendete Schlüssel und Zeiger rekursiv aus dem zweiten, dritten und vierten Schlüssel, sowie dem zweiten Zeiger bestimmen lässt, kann auf eine aufwändige Speicherung einer Vielzahl von Schlüsseln und Zeigern verzichtet werden, wie sie zur Verschlüsselung und zentralen Abspeichern von Daten auf einem Datenserver notwendig sind. Selbst bei Kenntnis eines beliebigen ersten Schlüssels und eines zugehörigen ersten Zeigers ist es nicht möglich, daraus ohne Kenntnis des zweiten, dritten und vierten Schlüssels sowie des zweiten Zeigers auf andere erste Zeiger und Schlüssel zu schließen, mit welchen andere Daten auf dem Datenserver abgelegt sind. Ausschließlich der Inhaber des zweiten, dritten und vierten Schlüssels sowie des zweiten Zeigers ist in der Lage, ausgehend von einem ersten Schlüssel und einem ersten Zeiger weitere erste Schlüssel und erste Zeiger rekursiv zu berechnen.

Nach einer Ausführungsform der Erfindung wird der Indexwert um eins erhöht und es wird ein neuer zusätzlicher erster Zeiger aus dem einen Rekursionsschritt zuvor erzeugten ersten Zeiger rekursiv erzeugt, wobei der zuvor erzeugte erste Zeiger verworfen wird, wenn der aus dem einen Rekursionsschritt zuvor erzeugte ersten Schlüssel und erste Zeiger einem in einem beliebigen Rekursionsschritt zuvor erzeugten ersten Zeiger und dem in diesem beliebigen Rekursionsschritt zuvor erzeugten ersten Schlüssel entsprechen.

Dadurch wird vermieden, dass mehrfach identische Zeiger-Schlüsselpaare auftreten, wodurch es unmöglich wäre, eindeutig in einem durch den ersten Zeiger identifizierten Speicherbereich gespeicherte Datensätze voneinander zu trennen. Dies ist dann relevant, wenn von ein- und demselben Patienten mehrere Datensätze den gleichen Zeiger und die gleiche Verschlüsselung aufweisen.

Nach einer Ausführungsform der Erfindung erfolgen die Erzeugung des ersten Schlüssels und/oder die Erzeugung des ersten Zeigers unter Verwendung einer Hash-Funktion. Hash-Funktionen haben dabei den Vorteil einer einfachen und schnellen Werteberechnung. Außerdem hat die Verwendung einer Hash-Funktion den Vorteil, dass aus einem Hash-Wert so gut wie unmöglich dessen originale zugrunde liegende Datenmenge zurückberechnet werden kann und somit bereits erzeugte oder initiale Schlüssel oder Zeiger nicht mehr ermittelbar sind. Damit ist ein hohes Sicherheitsniveau gewährleistet.

Nach einer Ausführungsform der Erfindung beinhalten die Daten z.B. medizinische Patientendaten. Außerdem beinhalten die Daten eine eineindeutige Patientenkennung. Die Verwendung einer eineindeutigen Patientenkennung hat den Vorteil, dass im Falle dessen wenn Patientendaten von zwei Patienten mit dem gleichen ersten Schlüssel und dem gleichen ersten Zeiger abgespeichert wurden, nach Entschlüsselung der Daten diese anhand der eineindeutigen Patientenkennung dem jeweiligen Patienten zugeordnet werden können.

Nach einer Ausführungsform der Erfindung sind der zweite Schlüssel, der dritte Schlüssel, der vierte Schlüssel, der zweite Zeiger, der Indexwert und die eineindeutige Patientenkennung in einem Speicherbereich eines tragbaren Datenträgers aufgrund einer Personalisierung gespeichert, wobei der tragbare Datenträger einen Prozessor umfasst und wobei die Erzeugung des ersten Schlüssels und die Erzeugung des ersten Zeigers durch den Prozessor erfolgt. Bei dem tragbaren Datenträger mit dem Prozessor handelt es sich dabei vorzugsweise um eine Chip- oder Smartkarte. Alternativ sind jedoch eine Vielzahl anderer tragbarer Datenträger mit integriertem Prozessor denkbar. Dies umfasst z. B. die Integration in Mobilfunkgeräte, Armbanduhren, USB Sticks und vieles mehr. Die besagten Schlüssel, der zweite Zeiger, der Indexwert und die eineindeutige Patientenkennung werden einmal z. B. in einer Arztpraxis individuell personalisiert für den Patienten erzeugt und auf die Chipkarte gespeichert. Dabei sollte die Erzeugung der entsprechenden Daten so erfolgen, dass diese Daten zufälliger Natur sind und somit weder durch irgendwelche Personendaten auf die Daten geschlossen werden kann, noch umgekehrt Personendaten aus den Daten abgeleitet werden können.

Nach einer Ausführungsform der Erfindung umfasst die Erzeugung der eineindeutigen Patientenkennung die einmalige Erzeugung einer Patientenkennung durch ein zweites Datenverarbeitungssystem, die Erzeugung einer Kennung aus der erzeugten Patientenkennung durch das zweite Datenverarbeitungssystem, die Übertragung der Kennung an das erste Datenverarbeitungssystem und die Überprüfung auf das Vorhandensein der Kennung in einer Liste des ersten Datenverarbeitungssystems, wobei bei Vorhandensein der Kennung die vorigen Schritte wiederholt werden, wobei bei nicht Vorhandensein der Kennung die Kennung in der Liste gespeichert wird.

Das erfindungsgemäße Verfahren zur Erzeugung der eineindeutigen Patientenkennung hat den Vorteil, dass mit nahezu absoluter Sicherheit die Vergabe zweier identischer Patientenkennungen an zwei verschiedene Patienten ausgeschlossen werden kann. Vorzugsweise erfolgt die Erzeugung der Kennung aus der Patientenkennung z. B. durch eine Standard-Hash-Funktion wie z. B. die RIPEMD-256-Hash-Funktion. Da lediglich der Hash-Wert der Patientenkennung an das zweite Datenverarbeitungssystem übertragen wird und von diesem auf eventuell vorhandene Duplikate überprüft wird, ist ein hohes Sicherheitsniveau, auch während der Übertragung der Kennung gewährleistet, denn die Patientenkennung verlässt das zweite Datenverarbeitungssystem nicht. Aus dem erzeugten Hash-Wert lässt sich auch nicht die entsprechende Patientenkennung zurückrechnen, wodurch einem Missbrauch vorgebeugt wird.

Nach einer Ausführungsform der Erfindung umfasst das Speichern der Daten in dem ersten Datenverarbeitungssystem die Schritte der Zuordnung eines Indexwerts zu den Daten, wobei für neu zu speichernde Daten der Indexwert um eins erhöht wird und der neue Indexwert auf dem tragbaren Datenträger gespeichert wird. In einem weiteren Schritt erfolgt das Verschlüsseln der Daten mit dem zuvor rekursiv erzeugten ersten Schlüssel und das Speichern der verschlüsselten Daten in einem durch den rekursiv erzeugten ersten Zeiger identifizierten Speicherbereich des ersten Datenverarbeitungssystems.

Da die rekursive Erzeugung von erstem Schlüssel und erstem Zeiger in dem Prozessor der Chipkarte erfolgt, müssen die dazu verwendeten zweiten, dritten und vierten Schlüssel sowie der zweite Zeiger die Chipkarte nie verlassen, wodurch einem Ausspähen dieser Schlüssel und dieses Zeigers durch Unbefugte vorgebeugt wird. Sollten dennoch Unbefugte Zugriff auf das erste Datenverarbeitungssystem erhalten, so finden diese dort lediglich eine Vielzahl von nicht-zusammenhängenden Speicherbereichen mit entsprechenden verschlüsselten Daten. Selbst bei Entschlüsselung eines dieser Datensätze lässt sich jedoch daraus nicht auf einen zugehörigen Patienten schließen. Die entschlüsselten Daten beinhalten zwar die eineindeutige Patientenkennung, welche jedoch keinen Rückschluss auf Personendaten ermöglicht. Ebenso ist es nicht möglich, anhand des einmalig entschlüsselten Datensatzes auf weitere dem Patienten zugehörige Datensätze zu schließen. Diese sind in verschiedenen vorzugsweise nicht zusammenhängenden Speicherbereichen des ersten Datenverarbeitungssystems verstreut gespeichert.

Außerdem hat das erfindungsgemäße Verfahren zum Speichern von Daten den Vorteil, dass ein aufwändiges Verwalten von Schlüssel- und Zeigerkombinationen für einen Patienten vermieden wird. Für jeden neu zu speichernden Datensatz wird ausgehend von einem initialen Satz von Zeigern und Schlüsseln das neu benötigte Zeiger-Schlüsselpaar zur Speicherung der neu zu speichernden Daten errechnet.

Nach einer Ausführungsform der Erfindung umfasst das Abfragen von in dem ersten Datenverarbeitungssystem gespeicherten Daten die Schritte des Abfragens der verschlüsselten Daten von einem durch den rekursiv erzeugten ersten Zeiger identifizierten Speicherbereich des ersten Datenverarbeitungssystems sowie das Entschlüsseln der verschlüsselten Daten mit dem rekursiv erzeugten ersten Schlüssel. Damit erfordert ein Abfragen von Patientendaten die Kenntnis des zweiten, dritten und vierten Schlüssels sowie des zweiten Zeigers. Sind diese dabei so auf dem tragbaren Datenträger gespeichert, dass sie nicht ausgelesen werden können und der Prozessor des tragbaren Datenträgers lediglich die erzeugten gehashten ersten Zeiger und ersten Schlüssel ausgibt, ist somit eine Abfrage von Patientendaten ausschließlich unter Verwendung der personalisierten Chipkarte möglich.

Nach einer Ausführungsform der Erfindung umfasst das Speichern der Daten zusätzlich die Speicherung von Metadaten in einem durch den rekursiv erzeugten ersten Zeiger identifizierten Speicherbereich des ersten Datenverarbeitungssystems, wobei die Metadaten unverschlüsselt mit den Daten verknüpft gespeichert werden. Ebenso umfasst das Abfragen der Daten den zusätzlichen Schritt des separaten Abfragens der Metadaten von einem durch den rekursiv erzeugten ersten Zeiger identifizierten Speicherbereich des ersten Datenverarbeitungssystems, wobei die Metadaten unverschlüsselt mit den Daten verknüpft sind. Dadurch ergibt sich der Vorteil, dass anstatt dem Herunterladen von kompletten, gegebenenfalls sehr umfangreichen Datensätzen zu einem Arztcomputer im Voraus die herunterzuladenden Daten anhand der Metadaten selektiert werden können. So können die Metadaten im Klartext beschreibende Begriffe umfassen, die auch gegebenenfalls unter Verwendung eines arzt-spezifischen Codes eine Kurzbezeichnung, z. B. des durch die zugehörigen Daten aufgezeigten Krankheitsbildes oder Diagnoseverfahrens Aufschluss geben.

Ebenso ist es möglich, in die Metadaten die Kategorie der Daten aufzunehmen. Beispielsweise gibt eine solche Kategorie an, ob es sich um zahnmedizinische, urologische, gynäkologisch oder andere facharzt-spezifische Daten handelt. Ferner können die Metadaten angeben, ob es sich beispielsweise um Rezeptdaten, Diagnosedaten oder Bilddaten handelt. So würden schließlich beispielsweise in einer Zahnarztpraxis typischerweise lediglich solche Patientendaten eines Patienten heruntergeladen und entschlüsselt werden, welche als Meta-Information die Angabe "zahnmedizinische Daten" haben. Dadurch wird unnötiger Datenverkehr vermieden und die zur Entschlüsselung der Daten benötigten Systemressourcen der Zahnarztpraxis reduziert.

Nach einer Ausführungsform der Erfindung werden die zur Speicherung in dem durch den rekursiv erzeugten ersten Zeiger identifizierten Speicherbereich des ersten Datenverarbeitungssystems vorgesehenen verschlüsselten Daten mit einer Markierung versehen an das erste Datenverarbeitungssystem übertragen. Dabei werden in dem ersten Datenverarbeitungssystem gespeicherte Daten in dem durch den rekursiv erzeugten ersten Zeiger identifizierten Speicherbereich aufgrund der Markierung verändert. Eine solche Veränderung umfasst das Löschen der Daten und/oder das Bearbeiten der Daten und/oder das Hinzufügen der Daten, jeweils aufgrund der besagten Markierung.

Jegliches Verändern der Daten wird dabei auf dem ersten Datenverarbeitungssystem protokolliert. Die Verwendung der Markierung, welche mit den Daten an das erste Datenverarbeitungssystem übertragen wird hat den Vorteil, dass eine hohe Flexibilität bezüglich des Speicherns der Daten auf dem ersten Datenverarbeitungssystem gewährleistet ist. So können z. B. bei einer Fehleingabe von Daten die falsch eingegebenen Daten wieder von dem Datenverarbeitungssystem entfernt werden oder zu Protokollierungszwecken in einem zweiten Speicherbereich historisch abgelegt werden. Ebenso ist es möglich, versehentlich vergessene Daten, die bei einer Behandlung aufgenommen aber nicht während dieser Behandlung an das Datenverarbeitungssystem übertragen wurden, nachträglich hinzuzufügen. Selbstverständlich ist es auch möglich, nachträglich eine falsch gestellte Diagnose durch eine Neuübertragung der Daten zu korrigieren. Um jedoch einem Missbrauch vorzubeugen ist hierfür das permanente Mitprotokollieren der Veränderung der Daten auf dem Datenverarbeitungssystem vorgesehen. Somit kann im Zweifelsfall auf einen eventuellen Missbrauch rückgeschlossen werden. Es sei jedoch angemerkt, dass bevorzugterweise neu eingegebene Daten immer in einem neuen Speicherbereich des ersten Datenverarbeitungssystems gespeichert werden. Dadurch ist ein vollständiger Überblick über alle gesundheitsbezogenen Aktivitäten stetig gewährleistet.

Nach einer Ausführungsform der Erfindung erfolgt das Verschlüsseln und/oder Entschlüsseln und/oder Abfragen und/oder Speichern der Daten durch das zweite Datenverarbeitungssystem. Ein solches zweites Datenverarbeitungssystem ist dabei z. B. durch das Arztinformationssystem, bzw. den Arztrechner einer Arztpraxis ausgebildet.

Nach einer Ausführungsform der Erfindung werden mit dem rekursiv erzeugten ersten Schlüssel nicht-entschlüsselbare Teile der empfangenen Daten verworfen. Außerdem werden mit dem rekursiv erzeugten ersten Schlüssel entschlüsselte Daten verworfen, wenn die entschlüsselten Daten eine Patientenkennung beinhalten, wobei die Patientenkennung nicht der auf dem tragbaren Datenträger gespeicherten Patientenkennung entspricht. Diese beiden Schritte sind zwingend notwendig, da Hash-Funktionen im Allgemeinen nicht zwingend kollisionsfrei sind. Das heißt, ein- und derselbe Hash-Wert kann mit einer extrem geringen Wahrscheinlichkeit von derselben Hash-Funktion mit verschiedenen Quelldaten erzeugt werden. Dadurch jedoch, dass die Daten die eineindeutige Patientenkennung beinhalten ist es möglich, dass zwei Datensätze von unterschiedlichen Patienten, welche in demselben Speicherbereich des ersten Datenverarbeitungssystems mit derselben Verschlüsselung gespeichert sind, voneinander unterschieden werden können. Sind die besagten beiden Datensätze mit einer unterschiedlichen Verschlüsselung gespeichert, sind ein Unterscheiden und eine Zuordnung der entsprechenden Datensätze schon aufgrund der Entschlüsselbarkeit möglich.

In einem weiteren Aspekt betrifft die Erfindung einen tragbaren Datenträger mit zumindest einem Prozessor zur Erzeugung eines ersten Schlüssels zur Verschlüsselung und/oder Entschlüsselung von Daten und eines ersten Zeigers, wobei die Daten auf einem ersten Datenverarbeitungssystem in einem durch den ersten Zeiger identifizierten Speicherbereich gespeichert und/oder speicherbar sind, mit Mitteln zur rekursiven Erzeugung des ersten Schlüssels aus einem zweiten Schlüssel und Mitteln zur rekursiven Erzeugung des ersten Zeigers aus einem zweiten Zeiger, wobei die Anzahl der Rekursionen für die Durchführung der rekursiven Erzeugung des ersten Schlüssels und des ersten Zeigers durch einen Indexwert festgelegt ist.

Nach einer Ausführungsform der Erfindung umfasst der tragbare Datenträger mit Prozessor ferner Mittel zur Erzeugung des ersten Schlüssels unter Verwendung des zweiten Schlüssels und eines dritten Schlüssels, Mittel zur Erzeugung des ersten Zeigers unter Verwendung des zweiten Zeigers und eines vierten Schlüssels, Mittel zur neuen Erzeugung des ersten Schlüssels unter Verwendung des zuvor erzeugten ersten Schlüssels und des zweiten Schlüssels, sowie Mittel zur neuen Erzeugung des ersten Zeigers unter Verwendung des zuvor erzeugten ersten Zeigers und des vierten Schlüssels.

Nach einer Ausführungsform der Erfindung sind der erste Schlüssel und/oder der erste Zeiger durch die Mittel zur Erzeugung des ersten Schlüssels und/oder den Mitteln zur Erzeugung des ersten Zeigers unter Verwendung einer Hashfunktion erzeugbar.

Nach einer Ausführungsform der Erfindung beinhalten die Daten Patientendaten. Außerdem beinhalten die Daten vorzugsweise eine eineindeutige Patientenkennung.

Nach einer Ausführungsform der Erfindung sind der zweite Schlüssel und der dritte Schlüssel und der vierte Schlüssel und der zweite Zeiger und der Indexwert und die eineindeutige Patientenkennung aufgrund einer Personalisierung in einem Speicherbereich des tragbaren Datenträgers gespeichert, wobei der Prozessor zur Erzeugung des ersten Schlüssels und/oder des ersten Zeigers ausgebildet ist. Dabei ist der tragbare Datenträger mit dem Prozessor durch eine Chipkarte ausgebildet.

Im einem weiteren Aspekt betrifft die Erfindung eine Datenverarbeitungsvorrichtung mit Mitteln zur Kommunikation mit einem erfindungsgemäßen tragbaren Datenträger mit Prozessor mit Mitteln zur Zuordnung eines Indexwerts zu den Daten, wobei für neu zu speichernde Daten der Indexwert um eins erhöht wird und der neue Indexwert auf dem tragbaren Datenträger gespeichert wird. Ferner umfasst die Datenverarbeitungsvorrichtung Mitteln zum Verschlüsseln der Daten mit dem rekursiv erzeugten ersten Schlüssel sowie Mitteln zum Speichern der verschlüsselten Daten in einem durch den rekursiv erzeugten ersten Zeiger identifizierten Speicherbereich des ersten Datenverarbeitungssystems.

Nach einer Ausführungsform der Erfindung umfasst die Datenverarbeitungsvorrichtung ferner Mitteln zum Abfragen der verschlüsselten Daten von einem durch den rekursiv erzeugten ersten Zeiger identifizierten Speicherbereich des ersten Datenverarbeitungssystems, sowie Mitteln zum Entschlüsseln der verschlüsselten Daten mit dem rekursiv erzeugten ersten Schlüssel.

Nach einer Ausführungsform der Erfindung umfasst die Datenverarbeitungsvorrichtung ferner Mittel zum zusätzlichen Speichern von unverschlüsselten Metadaten in dem durch den rekursiv erzeugten ersten Zeiger identifizierten Speicherbereich des ersten Datenverarbeitungssystems, wobei die Metadaten mit den Daten verknüpft speicherbar sind. Nach einer Ausführungsform der Erfindung umfasst die Datenverarbeitungsvorrichtung ferner Mittel zum Abfragen der unverschlüsselten Metadaten von einem durch den rekursiv erzeugten ersten Zeiger identifizierten Speicherbereich des ersten Datenverarbeitungssystems, wobei die Metadaten unverschlüsselt mit den Daten verknüpft sind.

In einem weiteren Aspekt betrifft die Erfindung ein Computerprogrammprodukt mit von einem Prozessor ausführbaren Instruktionen zur Durchführung des erfindungsgemäßen Verfahrens zur Speicherung und Abfrage von Daten.

Im Folgenden werden bevorzugte Ausführungsformen der Erfindung anhand der Zeichnungen näher erläutert. Es zeigen.
- Figur 1:: ein Blockdiagramm einer Ausführungsform eines Datenverarbeitungssystems zur Durchführung einer Ausführungsform eines erfindungsgemäßen Verfahrens,
- Figur 2:: ein Flussdiagramm eines erfindungsgemäßen Verfahrens zur Speicherung von Patientendaten,
- Figur 3:: ein Flussdiagramm eines erfindungsgemäßen Verfahrens zur Abfrage von Patientendaten,
- Figur 4:: ein Flussdiagramm eines erfindungsgemäßen Verfahrens zur Erzeugung einer GUID.

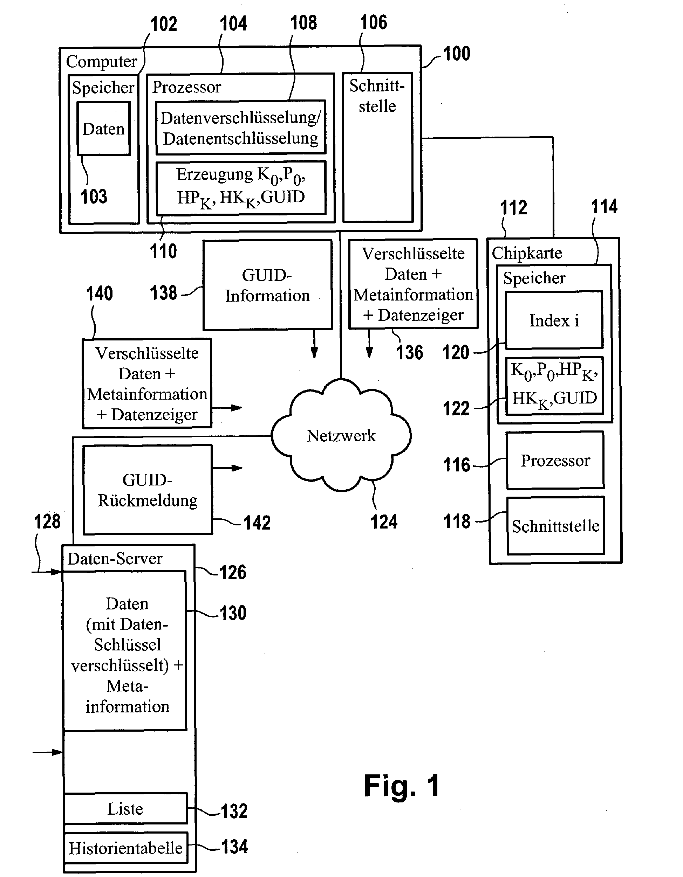

Die Fig. 1 zeigt ein Blockdiagramm einer Ausführungsform eines Datenverarbeitungssystems zur Durchführung einer Ausführungsform eines erfindungsgemäßen Verfahrens. Das Datenverarbeitungssystem umfasst einen Computer 100 der über ein Netzwerk 124 mit einem Datenserver 126 verbunden ist. Der Computer 100 hat einen Speicher 102, welcher Daten 103 beinhaltet. Bei diesen Daten handelt es sich beispielsweise um Patientendaten wie Röntgenbilder, Diagnosedaten, Rezeptdaten oder ähnliches. Die Daten 103 können beispielsweise von einem behandelnden Arzt in den Computer 100 eingegeben werden.

Alternativ oder zusätzlich ist der Computer 100 mit einem Praxis-EDV-System der Arztpraxis vernetzt und erhält automatisch über das Netzwerk 124 die Daten 103. Ferner ist es auch möglich, in den Computer 100 von einem medizintechnischen Gerät, wie z. B. einem Röntgen-Gerät, Computer-Tomographen, Kernspin-Tomographen oder Ultraschall-Gerät gelieferte digitale Bilddaten einzuspeisen. Dies kann wiederum automatisch über ein Netzwerk oder durch Einlesen von z. B. auf einer CD-ROM oder DVD gespeicherte Massendaten in den Computer 100 erfolgen. Ferner ist es auch möglich, dass der Computer 100 in ein solches medizintechnisches Gerät integriert ist oder unmittelbar an ein solches Gerät angeschlossen ist, welches die Daten 103 erzeugt.

Der Computer 100 hat zumindest einen Prozessor 104 zur Ausführung von Programmen 108 und 110. Das Programm 108 dient dabei der Verschlüsselung oder Entschlüsselung von Daten, während das Programm 110 der initialen Erzeugung verschiedener Schlüssel und Zeiger dient.

Der Computer 100 ist mit einer Schnittstelle 106 versehen. Die Schnittstelle 106 dient dabei z. B. zur Anbindung an das Netzwerk 124. Ebenso kann diese Schnittstelle durch ein Kartenlesegerät ausgebildet sein, über welches der Computer 100 unter Verwendung der Schnittstelle 106 eine Chipkarte 112 lesen kann.

Die Chipkarte 112 ermöglicht dabei die Speicherung einer virtuellen Patientenakte auf dem Datenserver 126. Auf die auf dem Datenserver 126 gespeicherten Daten 130 kann dabei nur unter Verwendung der Chipkarte 112 zugegriffen werden.

Die Chipkarte enthält einen Speicher 114 und einen Prozessor 116. Über die Schnittstelle 118 kommuniziert die Chipkarte 112 mit dem Computer 100 bzw. mit dessen Schnittstelle 106.

In dem nicht-flüchtigen Speicher 114 sind verschiedene Parameter gespeichert, wie z. B. ein Index "i₀"120, sowie verschiedene Schlüssel und Zeiger 122. Der Index i₀120 ist dabei aus dem Speicher 114 auslesbar, veränderbar und wieder in dem Speicher 114 speicherbar. Die Parameter 122 hingegen sind in dem nicht-flüchtigen Speicher 114 fest gespeichert und können von dort auch nicht ausgelesen werden. Sie werden von dem Prozessor 116 zur rekursiven Erzeugung von Schlüsseln und Zeigern verwendet, wobei die rekursiv erzeugten Schlüssel und Zeiger über die Schnittstelle 118 an den Computer 100 zurückgegeben werden. Eine Ausnahme bildet hierbei die GUID (Global Unique Identifier), welche eine eineindeutige Patientenkennung ist und welche durch den Computer 100 ausgelesen werden und zusammen mit den Daten verschlüsselt zum Datenserver 126 übertragen werden kann. Zur Speicherung von Daten 103 auf dem Datenserver 126 wird beispielsweise wie folgt vorgegangen:
Kommt ein Patient in eine Arztpraxis mit dem Computer 100, so erfolgt zuerst eine Überprüfung daraufhin, ob der Patient bereits im Besitz der Chipkarte 112 ist. Sinn und Zweck der Chipkarte 112 ist dabei die Verwendung der Chipkarte 112 als elektronische Gesundheitskarte. In dem Speicher 114 der Chipkarte 112 können daher zusätzlich zu den Parametern 120 und 122 auch persönliche Informationen des Patienten abgespeichert werden. Diese Informationen umfassen Angaben zur Notfallversorgung, eine Dokumentation augenblicklich eingenommener Medikamente, Vermerke zum Organspenderstatus, Name und Adresse des Patienten, Angaben zur Krankenversicherung, und vieles mehr. Entsprechende Bereiche der Chipkarte können dabei z. B. durch eine PIN zugriffsgeschützt sein, so dass ein Zugriff ohne Zustimmung des Patienten auf dem Speicher 114 nicht möglich ist.

Ist nun der Patient nicht im Besitz einer entsprechenden Chipkarte 112, so wird ihm eine solche durch die Arztpraxis ausgehändigt und die Chipkarte wird zur Benutzung initialisiert. Diese Initialisierung beinhaltet eine Erzeugung der Parameter K₀, P₀, HP_{K}, HK_{K}, sowie der eineindeutigen Patientenkennung GUID durch das Programm 110 des Computers 100. Dabei ist K₀ ein zufälliger Schlüssel, P₀ ein zufälliger Zeiger, HP_{K} ein zufälliger Schlüssel, HK_{K} ebenfalls ein zufälliger Schlüssel, wobei die K₀, P₀, HP_{K}, HK_{K} und GUID nach Erzeugung unveränderbar in dem Speicher 114 der Chipkarte 112 gespeichert werden.

Alternativ zur Initialisierenden Erzeugung der Parameter K₀, P₀, HP_{K}, HK_{K} der Chipkarte durch die Arztpraxis ist es auch möglich, dass die Chipkarte bereits initialisiert mit fest eingespeicherten Parametern K₀, P₀, HP_{K}, HK_{K} sowie einer GUID z.B. von einem Chipkarten-Hersteller an die Arztpraxis ausgeliefert wird. Es sei allgemein angemerkt,. dass vorzugsweise der Zugriff auf die Chipkarte 112 durch eine PIN oder ähnliches geschützt ist, so dass das Auslesen und Schreiben von Daten auf die Chipkarte 112 und/oder die Erzeugung von Zeigern und Schlüsseln durch die Chipkarte 112 nur durch autorisierte Personen erfolgen kann.

Zur Datensicherung werden die besagten fünf Werte K₀, P₀, HP_{K}, HK_{K} und die GUID zusätzlich auf dem Computer 100 in einer sicheren Umgebung gespeichert, so dass ein unbefugter Zugriff auf diese Parameter durch Außenstehende nicht möglich ist. Dies ist notwendig, falls der Patient seine Chipkarte 112 verlieren würde und damit ein Zugriff auf seine Patientendaten, welche auf dem Datenserver 126 gespeichert sind, nicht mehr möglich wäre. Bei der Initialisierung der Karte wird außerdem ein Index i₀=0 in den Speicher 114 der Chipkarte gespeichert. Dieser Index i₀ ist durch den Computer 100 auslesbar, veränderbar und auf der Chipkarte 112 neu abspeicherbar. Außerdem sollte bei jeder Veränderung des Index i₀ eine Kopie des aktuellen Index i₀ auf dem Datenserver 126 gespeichert werden, sodass ebenfalls im Falle eines Verlustes der Chipkarte 112 der Index i₀ stets auf dem aktuellen Stand abrufbar ist. Gegebenenfalls kann dabei der Index i₀ z.B. mit K₀ verschlüsselt auf dem Datenserver 126 gespeichert sein.

Sollen nun neue Patientendaten 103 auf dem Datenserver 126 gespeichert werden, so führt der Patient seine Chipkarte 112 in ein entsprechendes Kartenlesegerät ein, welches an dem Computer 100 ausgebildet ist. Alternativ dazu bietet sich auch die Möglichkeit, eine solche Kommunikation zwischen Chipkarte 112 und Computer 100 über eine Luftschnittstelle durchzuführen. Um Daten 103 nun auf dem Datenserver 126 abzuspeichern, erzeugt der Prozessor 116 unter Verwendung der Parameter K₀, P₀, HP_{K} und HK_{K} rekursiv einen für die Daten 103 verwendbaren Datenschlüssel und einen Datenzeiger. Der Datenschlüssel und der Datenzeiger werden über die Schnittstelle 118 an den Computer 100 übertragen, und über den Datenschlüssel erfolgt mit dem Modul 108 des Prozessors 104 eine Verschlüsselung der Daten 103. Zusätzlich an die verschlüsselten Daten wird optional in unverschlüsselter Form eine Meta-Information angehängt, wobei die Meta-Information z. B. die Kategorie der Daten wie Bilddaten oder Rezeptdaten, sowie einen Facharzt-Typ anhand einer Codierung z. B. in einem 512-Bit-Feld spezifiziert.

Zusammen mit den Daten wird ebenso die aus dem Speicher 114 der Chipkarte 112 ausgelesene GUID mit verschlüsselt. Diese Verschlüsselung der GUID gemeinsam mit den Daten 103 hat den Zweck, dass bei einer Datenentschlüsselung nach späterem Abrufen von Patientendaten von dem Datenserver 126 eindeutig verifiziert werden kann, dass die abgerufenen Daten auch dem Patienten mit der Chipkarte 112, bzw. dessen GUID zugehörig sind.

Die verschlüsselten Daten werden zusammen mit der angehängten Meta-Information, sowie dem durch den Prozessor 116 erzeugten Datenzeiger als Datenpaket 136 über das Netzwerk 124 an den Datenserver 126 übertragen. Auf dem Datenserver 126 werden dann die mit dem Datenschlüssel verschlüsselten Daten zusammen mit der angehängten Meta-Information als Dateneintrag 130 gespeichert, wobei die Speicherung in dem durch den durch den Computer 100 erzeugten Zeiger identifizierten Speicherbereich 128 erfolgt. Gleichzeitig erfolgt in einer Historientabelle 134 ein Eintrag darüber, dass das Computersystem 100 eine Datenspeicherung in dem durch den Zeiger 128 identifizierten Speicherbereich vorgenommen hat.

Das Abrufen der Dateneinträge 130 erfolgt in ähnlicher Weise wie die Speicherung der Daten. Zum Abrufen führt z. B. der Patient wieder seine Chipkarte 112 in ein entsprechendes Lesegerät des Computers 100 der Arztpraxis ein. Daraufhin liest der Computer 100 den Index i₀120 aus dem Speicher 114 der Chipkarte 112 aus, sowie die GUID. Der Index i₀ dient dabei dazu, dem Computer 100 bzw. dem Prozessor 116 anzugeben, wie viele Dateneinträge 130 des Patienten auf dem Datenserver 126 gespeichert sind. So ist typischerweise z. B. nach fünf Arztbesuchen ein Index i₀=5 in dem Speicher 114 der Chipkarte 112 gespeichert.

Damit der Computer 100 Kenntnis über die gespeicherten Dateneinträge 130 auf dem Datenserver 126 erlangt, findet auf der Chipkarte 112 durch den Prozessor 116 eine rekursive Erzeugung von Zeigern und Schlüsseln statt, wobei entsprechende Rekursionen im vorliegenden Fall fünfmal durchgeführt werden (i₀=5) unter Verwendung der Parameter K₀, P₀, HP_{K} und HK_{K}.

Unter Verwendung der durch die Chipkarte 112 rekursiv erzeugten Zeiger greift der Computer 100 über das Netzwerk 124 auf den Datenserver 126 zu, um in durch die Zeiger 128 identifizierten Speicherbereichen gespeicherte Meta-Informationen abzurufen. Diese Meta-Informationen werden daraufhin zurück an das Computersystem 100 übertragen, wo sie auf entsprechende Metainformation-Codierungen hin überprüft werden können. Handelt es sich beispielsweise bei dem Computer 100 um einen Client, welcher in einer Zahnarztpraxis Verwendung findet, so wird sich der behandelnde Arzt üblicherweise ausschließlich für auf dem Datenserver 126 gespeicherte Datenpakete 130 interessieren, welche zahnarztpraxen-relevante Informationen beinhalten. Somit kann durch Analyse der Meta-Informationen durch den Computer 100 selektiert werden, welche Dateneinträge 130 vollständig von dem Datenserver 126 auf den Computer 100 über das Netzwerk 124 heruntergeladen werden sollen.

Nach Selektion der entsprechenden Dateneinträge 130 werden die entsprechenden zugehörigen Zeiger an den Datenserver 126 übertragen. Entsprechende Dateneinträge 130, welche in durch die Zeiger 128 identifizierten Speicherbereichen gespeichert sind, werden als Datenpakete 140 über das Netzwerk 124 an den Computer 100 übertragen. Dort findet eine entsprechende Entschlüsselung der verschlüsselten Daten unter Verwendung der zuvor durch den Prozessor 116 rekursiv erzeugten Schlüssel durch den Prozessor 104, bzw. dem entsprechenden Computerprogramm 108 statt.

Zur Absicherung, dass die entsprechenden entschlüsselten Daten auch dem Patienten mit der Chipkarte 112 zugehörig sind, überprüft der Computer 100 die in den entschlüsselten Daten beinhaltete GUID und vergleicht diese mit der GUID, welche auf der Chipkarte 112 in dem Speicher 114 gespeichert ist. Stimmen beide GUIDs überein, so ist sichergestellt, dass die abgerufenen Daten mit absoluter Sicherheit dem Patienten mit der Chipkarte 112 zugehörig sind.

Um eine solche mit absoluter Sicherheit durchführbare Zuordnung von Daten mit angehängtem GUID zu einem Patienten und dessen auf seiner Chipkarte 112 gespeicherten GUID zu ermöglichen, muss eine eineindeutige Vergabe von GUIDs gewährleistet sein. Dabei kann z. B. wie folgt vorgegangen werden: Bei Initialisierung der Karte wird im Computer 100 eine GUID erzeugt. Diese wird mit einer Standard-Hash-Funktion (wie z. B. RIPEMD-256) in einen Hash-Wert umgewandelt und als GUID-Information 138 an den Datenserver 126 übermittelt. Die GUID-Information 138 wird daraufhin mit einer Liste 132 abgeglichen, welche auf den Datenserver 126 gespeichert ist. Die Liste 132 enthält dabei alle GUID-Informationen 138, die bisher an alle Patienten vergeben wurde. Findet sich nun beispielsweise ein Duplikat der soeben übermittelten GUID-Information 138 in der Liste 132, so erfolgt durch den Datenserver 126 eine GUID-Rückmeldung 142 an den Computer 100 mit dem Inhalt "GUID vergeben". Daraufhin erzeugt der Computer 100 eine neue zufällige GUID, welche wiederum über eine Standard-Hash-Funktion in einen Hash-Wert umgewandelt und an den Datenserver 126 übertragen wird. Findet sich eine solche neu erstellte GUID-Information 138 in der Liste 132 nicht, so wird diese GUID-Information der Liste 132 zugefügt. Die GUID-Rückmeldung des Datenservers 126 lautet dann z. B. "GUID akzeptiert". Der Computer 100 speichert daraufhin die erzeugte GUID in dem nicht-flüchtigen Speicher 114 der Chipkarte 112.

Der Vorteil dieses Verfahrens ist, dass über das Netzwerk 124 keinerlei Daten in Klartext übertragen werden, welche von unbefugten Nutzern ausgespäht werden könnten und zu einem Datenmissbrauch verwendet werden könnten. Über das Netzwerk 124 werden lediglich Hash-Werte in Form der GUID-Information 138 an den Datenserver 126 übermittelt, welche es praktisch unmöglich machen, daraus auf eine entsprechende Patientenkennung in Form der GUID zurückzuschließen. Problematisch bei der Verwendung von Hash-Werten ist jedoch, dass bei der Verwendung zweier verschiedener Eingaben-Datenmengen derselbe Hash-Wert berechnet werden kann. Dieses als "Kollision" bezeichnete Ereignis kann jedoch unter Verwendung spezieller Hash-Funktionen, das heißt bestimmte Algorithmen wie z. B. die besagte Standard-Hash-Funktion RIPEMD-256 minimiert werden. So reduziert sich die Wahrscheinlichkeit, dass eine Hash-Funktion eine Kollision erzeugt, auf 1:2²⁵⁶, das ist ca. 9x10⁻⁷⁸. Damit ist die Erzeugung einer Kollision durch die Hash-Funktion nahezu ausgeschlossen.

Es sei angemerkt, dass neben den verschlüsselten Daten, sowie der Meta-Information noch eine Vielzahl von in den Datenpaketen 136 beinhaltete Informationen unverschlüsselt an den Datenserver 126 übertragen werden können. Dies können z. B. spezielle Markierungen in Form von Flags sein, wobei die Flags Kommandos zum Löschen, Bearbeiten oder Hinzufügen von Daten sind.

Ebenso ist es möglich, Zugriffsberechtigungen zusammen mit den verschlüsselten Daten und der Meta-Information in einem Dateneintrag 130 auf dem Datenserver 126 zu speichern. Vorzugsweise erfolgt dabei die Abspeicherung von Zugriffsberechtigungen zusammen mit der Meta-Information. Die Zugriffsrechte können dabei beispielsweise in einem Bitfeld einer vorgegebenen Länge von z. B. 512 Bit gespeichert werden.

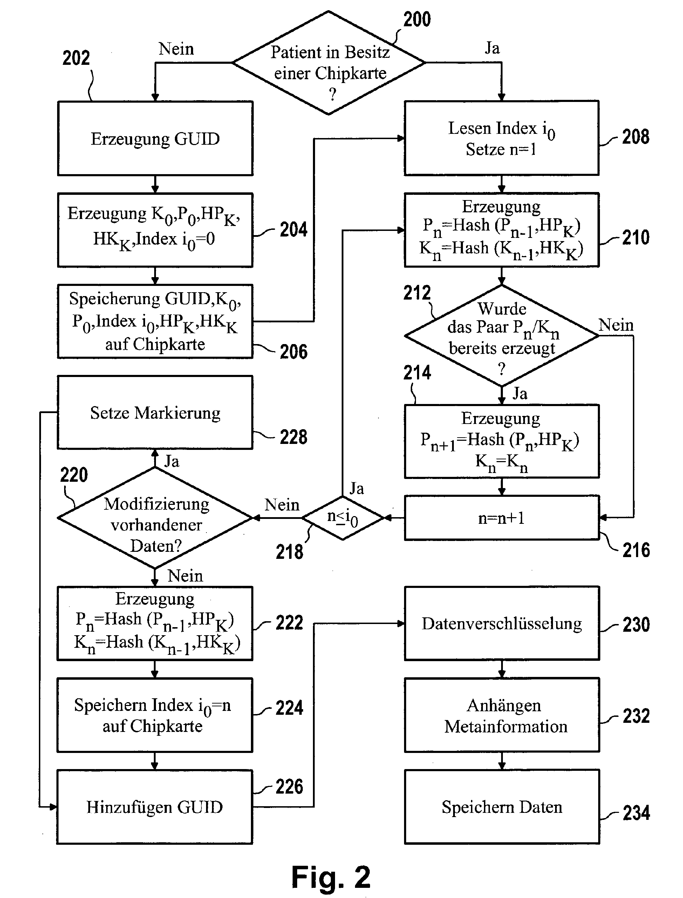

Die Fig. 2 zeigt ein Flussdiagramm eines erfindungsgemäßen Verfahrens zur Speicherung von Patientendaten. In Schritt 200 wird durch das Computersystem einer Arztpraxis z. B. überprüft, ob ein Patient im Besitz einer Chipkarte ist, auf der bereits die 4 Werte K₀, P₀, HP_{K}, HK_{K} und eine GUID gespeichert wurden. Ist dies nicht der Fall, so erzeugt das Computersystem der Arztpraxis einmalig eine eineindeutige Patientenkennung in Form einer GUID (Global Unique Identifier). Eine solche Erzeugung der GUID erfolgt durch das Computersystem der Arztpraxis in Schritt 202. Außerdem erfolgt in Schritt 204 die Erzeugung der Parameter K₀, P₀, HP_{K}, HK_{K}. Dabei handelt es sich bei Ko um einen zufälligen Schlüssel, bei P₀ um einen zufälligen Zeiger, bei HP_{K} um einen zufälligen Schlüssel und bei HK_{K} ebenfalls um einen zufälligen Schlüssel. In Schritt 206 werden die erzeugten GUID, K₀, P₀, HP_{K}, HK_{K} auf einer neuen Chipkarte, welche nun dem Patienten zugeordnet wird, gespeichert. Außerdem erfolgt eine Speicherung der besagten Informationen in einem sicheren Bereich des Arztinformationssystems als Sicherungskopie. Zusätzlich wird auf der Chipkarte des Patienten in Schritt 206 ein Index i₀ gespeichert, wobei der Index i₀ bei der erstmaligen Verwendung der Chipkarte, das heißt bei der Initialisierung auf i₀=0 gesetzt ist.

Entweder nach erstmaliger Initialisierung der Chipkarte, bzw. wenn ein Patient bereits im Besitz einer Chipkarte mit den entsprechenden Informationen K₀, P₀, HP_{K}, HK_{K}, i₀ und der GUID ist, erfolgt in Schritt 208 das Lesen des Index i₀. In Schritt 210 erfolgt die Erzeugung von Hash-Werten, wobei diese Erzeugung rekursiv erfolgt. Es werden insgesamt i-Zeiger und Schlüsselpaare berechnet, wobei die Bildung der Zeiger und Schlüsselliste einfach und performant ist, da Hash-Funktionen schnelle Berechnungsmethoden sind. Die Zeiger werden über die Funktion Pₙ = Hash(Pₙ₋₁, HP_{K}) erzeugt und die Schlüssel werden über die rekursive Hash-Funktion Kₙ = Hash(Kₙ₋₁, HK_{K}) erzeugt. Mit 1≤n≤i₀ ergeben sich i₀-Zeiger und Schlüsselpaare, mit denen auf gespeicherte Daten zugegriffen werden und diese entschlüsselt werden können. Für den ersten zu speichernden oder abzufragenden Datensatz wird dabei mit n=1 begonnen.

Durch die Verwendung des Key-Hash-Algorithmus ist sichergestellt, dass nur der Inhaber des Schlüssels H_{K} die Zeiger- und Schlüsselliste, bzw. die die ganze oder Teile der Sequenz erzeugen kann. Aus einem bekannten Zeiger oder Schlüssel können daher ohne Vorhandensein der Chipkarte (oder des Wertes H_{K}) keine Folgezeiger oder -schlüssel abgeleitet werden. Damit bleibt die Sequenz der auf einem Datenserver abgespeicherten Daten quasi anonym und ist auch nicht von Datenbank-Administratoren oder sonstigen Personen mit Zugriff auf den Datenserver ableitbar. Die Schlüssel befinden sich zu keinem Zeitpunkt auf dem Datenserver, bei den Zeigern gilt gleiches für den Bezug zum jeweiligen Patienten und für den Bezug der Zeiger untereinander.

Da nun Hash-Funktionen wie bereits erwähnt Kollisionen erzeugen können, das heißt, dass zwei gleiche Hash-Werte aus einer unterschiedlichen Quellmenge erzeugt werden können, muss sichergestellt sein, dass solche extrem seltenen Kollisionen nicht zu einer Nicht-Zuordenbarkeit oder fehlerhaften Zuordnung von verschlüsselten Daten zu einem Patienten bzw. dessen Patientenakte führen könnten. So gilt es den extrem unwahrscheinlichen Fall zu verhindern, dass ein Zeiger-Schlüsselpaar zweimal beim gleichen Patienten auftritt. In diesem Fall wären zwei verschiedene Datensätze desselben Patienten mit dem gleichen Schlüssel verschlüsselt und außerdem in demselben Speicherbereich auf dem Datenserver gespeichert. Damit wäre eine eindeutige Zuordnung dieses Datensatzes zu dem Zeiger nicht mehr möglich.

Um dies zu vermeiden, wird nach der Erzeugung des ersten Zeigers und Schlüssels in Schritt 210 das erfolgte Zeiger-Schlüsselpaar im Speicher des Arztrechners gehalten. So kann in Schritt 212 überprüft werden, ob ein Duplikat des soeben erzeugten Zeiger-Schlüsselpaares bereits zuvor erzeugt wurde. Sollte dieser extrem unwahrscheinliche Fall einmal auftreten, so wird in Schritt 214 einfach ein neuer Zeiger nachfolgend erzeugt, der bereits erzeugte Schlüssel hingegen beibehalten. So ergibt sich für den neuen Zeiger Pₙ₊₁ = Hash(Pₙ, HP_{K}) und Kₙ = Kₙ. In Schritt 216 erfolgt daraufhin eine Erhöhung des Lauf-Index um n=n+1. Dieser Schritt 216 wird auch durchgeführt, wenn, wie im Normalfall davon auszugehen, ein entsprechendes Zeiger-Schlüsselpaar in Schritt 212 als solches nicht aufgefunden werden kann.

Die Schritte 210 bis 216 werden nun so lange wiederholt, bis in Schritt 218 festgestellt wird, dass n nicht mehr kleiner oder gleich dem Index i₀ ist. Ist nun n nicht mehr ≤ i₀, wurden alle Zeiger-Schlüsselpaare erzeugt, welche zum Abrufen von gespeicherten und verschlüsselten Daten von dem Datenserver notwendig sind. Ist z. B. der Index i₀ = 5, das heißt es existieren insgesamt fünf Datensätze und eine Kollision wurde in Schritt 212 nicht detektiert, so ergeben sich insgesamt fünf eindeutige Zeiger-Schlüsselpaare, welche nun nach Schritt 218 dazu verwendet werden können, entsprechende Daten von dem Datenserver abzurufen. Die Daten sind dabei auf dem Datenserver in den durch die Zeiger Pₙ identifizierten Speicherbereichen gespeichert und dabei mit den zugehörigen Schlüsseln Kₙ verschlüsselt.

Im vorliegenden Fall soll nun insbesondere das Abspeichern bzw. Abändern vorhandener Daten auf dem Datenserver betrachtet werden. So wird in Schritt 220 entschieden, ob eine Modifizierung bereits vorhandener Daten stattfinden soll, oder ob Daten in einem neu anzulegenden Datensatz auf dem Server gespeichert werden sollen. So kann z. B. im Falle der Modifizierung bereits vorhandener Daten eine entsprechende Markierung in Schritt 228 gesetzt werden. Dem folgt das Hinzufügen der GUID, welche aus der Chipkarte des Patienten ausgelesen wurde, zu den Daten, um damit die Daten eineindeutig zugehörig zu dem Patienten zu kennzeichnen.

Ist eine Modifizierung vorhandener Daten nicht gewünscht, das heißt es sollen Daten vollkommen neu auf dem Datenserver gespeichert werden, so erfolgt nach der Abfrage in Schritt 220 in Schritt 222 die Erzeugung eines zusätzlichen Zeiger-Schlüsselpaars mit Pₙ = Hash (Pₙ₋₁, HP_{K}) und Kₙ = Hash (Kₙ₋₁, HK_{K}). Obwohl hier nicht gezeigt, so ist auch hier eine Überprüfung auf eine eventuelle Erzeugung eines bereits vorhandenen Zeiger-Schlüsselpaares notwendig. In diesem Fall wird zur Erzeugung eines eindeutigen Zeiger-Schlüsselpaares analog in den Schritten 212 bis 216 verfahren. Nach Erzeugung des neuen Zeiger-Schlüsselpaares erfolgt in Schritt 224 eine Speicherung des neuen Index i₀=n auf der Chipkarte. Dies ist deshalb notwendig, damit bei einem neuen Arztbesuch die entsprechenden Schlüsselpaare erzeugt werden können, um sicherzustellen, dass alle Datensätze von dem Datenserver abgerufen werden.

Nach Durchführung des Schritts 224 erfolgt im Schritt 226 wiederum das Hinzufügen der eineindeutigen Benutzerkennung GUID zu den Daten. In Schritt 230 erfolgt eine Datenverschlüsselung mit dem entsprechenden Datenschlüssel. Für neu zu speichernde Daten handelt es sich hierbei um den Schlüssel Kₙ. Für Daten, welche zu modifizieren sind, werden die Daten in Schritt 230 mit dem Schlüssel verschlüsselt, welcher den zu modifizierenden Datensatz zugehörig ist. In Schritt 232 erfolgt schließlich das Anhängen von Meta-Information an die verschlüsselten Daten, wobei die Meta-Information unverschlüsselt im Klartext angehängt wird.

Abhängig von der in Schritt 228 gesetzten Markierung erfolgt nun in Schritt 234 ein Löschen, Überschreiben oder zusätzliches Anhängen von Daten. Wurde keine Markierung in Schritt 228 gesetzt, weil eine Modifizierung vorhandener Daten nicht gewünscht ist, so erfolgt ein Speichern von Daten in Schritt 234 in einem durch den Zeiger Pₙ identifizierten Speicherbereich des Servers.

Es sei angemerkt, dass ein Hinzufügen von Daten zu einem bereits bestehenden verschlüsselten Datensatz, welcher in einem bestimmten Speicherbereich gespeichert ist, vorzugsweise nicht vorgesehen ist. Vielmehr ist in einem solchen Fall vorgesehen, dass hinzuzufügende Daten generell in einem neuen Speicherbereich gespeichert werden. Um ein Löschen und Modifizieren von Daten nachverfolgen zu können, werden entsprechende Zugriffe und Datenmodifikationen in einer Historientabelle auf dem Datenserver mitprotokolliert.

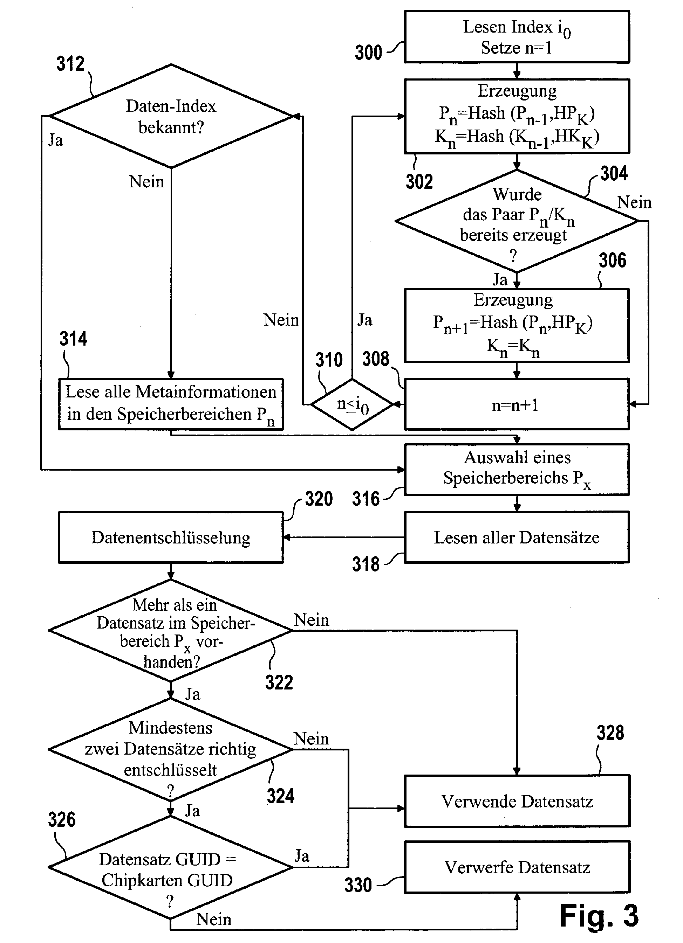

Die Fig. 3 zeigt ein Flussdiagramm eines erfindungsgemäßen Verfahrens zur Abfrage von Patientendaten. In Schritt 300 erfolgt das Lesen des Index i₀ von der Chipkarte. Außerdem wird die Laufvariable n=1 gesetzt. In Schritt 302 erfolgt die rekursive Erzeugung von Zeiger-Schlüsselpaaren über Hash-Funktionen. Die Zeiger werden wieder über Pₙ = Hash (Pₙ₋₁, HP_{K}) berechnet und die Schlüssel werden wiederum über Kₙ = Hash (Kₙ₋₁, HK_{K}) berechnet. Als Hash-Funktion kann dabei ein zuverlässiger Hash-Algorithmus wie z. B. der Keyed RIPEMD-Algorithmus verwendet werden. In Schritt 304 wird wieder überprüft, ob das soeben erzeugte Zeiger-Schlüsselpaar bereits zuvor in einem Schritt 302 erzeugt wurde. Dies dient wiederum dazu, um Kollisionen mit identischen Zeiger-Schlüsselpaaren zu vermeiden. Wurde ein solches Paar Pₙ/ Kₙ bereits erzeugt, so erfolgt in Schritt 306 die Erzeugung eines zusätzlichen Zeigers, der Schlüssel Kₙ wird jedoch beibehalten mit Kₙ = Kₙ. Daraufhin folgt in Schritt 308 die Erhöhung der Laufzeitvariable n um 1 (n=n+1).

Wurde in Schritt 304 festgestellt, dass ein erzeugtes Zeiger-Schlüsselpaar noch nicht zuvor erzeugt wurde, so erfolgt nach dem Schritt 304 sofort der Schritt 308 mit n=n+1, woraufhin nach dem Schritt 308 in Schritt 310 überprüft wird, ob die Anzahl der erzeugten Zeiger-Schlüsselpaare durch den Index i₀ gegebene Anzahl an Datensätzen entspricht. Ist n≤i₀, so wird nach dem Schritt 310 die Rekursion mit den Schritten 302 bis 308 weitergeführt. Ist jedoch in Schritt 310 n>i₀, so erfolgt daraufhin in Schritt 312 eine Abfrage, ob ein bestimmter Datenindex "x" dem abfragenden Computersystem bereits bekannt ist. Diese Abfrage in Schritt 312 ist z. B. nützlich, wenn während einer Behandlungssitzung durch den behandelnden Arzt Daten auf dem Datenserver abgespeichert wurden und der Arzt nun die zuvor gespeicherten Daten nochmals abrufen will. In diesem Fall ist ein direkter Zugriff durch das Arzt-Computersystem auf den Datenserver zum Auslesen der durch den Datenindex und den zugehörigen Zeiger identifizierten Datensatz sofort möglich.

Im üblichen Fall ist jedoch ein gewünschter Datenindex im Voraus nicht bekannt, so dass nach der Abfrage in Schritt 312 ein Auslesen aller Meta-Informationen in den Speicherbereichen Pₓ (1≤x≤i₀) durch das Arzt-Informationssystem erfolgt. Aufgrund der ausgelesenen Meta-Informationen erfolgt in Schritt 316 die Auswahl eines gewünschten Datensatzes "x", welcher von dem Datenserver abgerufen werden soll. Dieser Schritt 316 erfolgt auch alternativ, wenn in Schritt 312 der Datenindex vorgegeben wurde. In Schritt 318 werden alle in dem Speicherbereich Pₓ gespeicherten Datensätze gelesen, woraufhin diese in Schritt 320 mit dem zugehörigen Datenschlüssel Kₓ entschlüsselt werden.

In Schritt 322 wird daraufhin festgestellt, ob mehr als ein Datensatz in dem Speicherbereich Pₓ vorhanden ist. Dieser unwahrscheinliche Fall kann eintreten, da Hash-Funktionen und damit die Erzeugung von zufälligen Speicherbereichen Pₓ nicht zwingend kollisionsfrei sind. In diesem Fall muss sichergestellt werden, dass verschiedene Datensätze, welche verschiedenen Patienten zugehörig sind, trotzdem in eindeutiger Weise einem Patienten zuordenbar sind. Ist somit mehr als ein Datensatz in dem Speicherbereich Pₓ vorhanden, so wird nach Abfrage des Schrittes 322 in Schritt 324 überprüft, welche der Datensätze richtig entschlüsselt sind. Werden somit mehrere Datensätze mit gleichem Zeiger Pₓ gefunden, ist es dennoch höchstwahrscheinlich, dass die verwendeten Schlüssel Kₓ, mit welchen die entsprechenden Datensätze Pₓ verschlüsselt wurden, unterschiedlich sind. So kann nur der "korrekte" Datensatz mit dem zum erzeugten Zeiger Pₓ passenden Schlüssel Kₓ entschlüsselt werden. Kann in Schritt 324 ausschließlich ein Datensatz korrekt entschlüsselt werden, so wird auch in Schritt 328 ausschließlich dieser korrekt entschlüsselte Datensatz verwendet.

Tritt nun der extrem unwahrscheinliche Fall auf, dass zwei Datensätze von verschiedenen Patienten mit den gleichen Zeiger-Schlüsselpaaren im gleichen Speicherbereich des Servers gespeichert wurden und dabei mit dem gleichen Schlüssel verschlüsselt wurden, wird in Schritt 326 überprüft, welcher der Datensätze eine GUID aufweist, welche der GUID des Patienten mit der entsprechenden Chipkarte entspricht. Somit wird in Schritt 328 ausschließlich der Datensatz mit eindeutig zuordenbaren GUID verwendet. Hingegen wird in Schritt 330 der Datensatz verworfen, welcher die GUID eines anderen Patienten enthält.

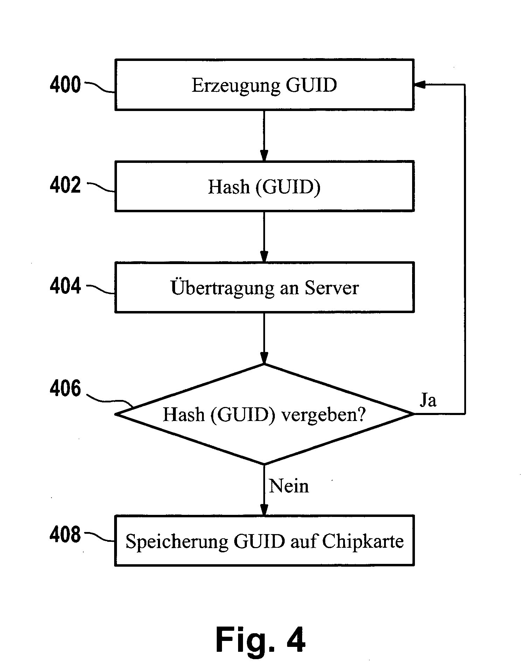

Die Fig. 4 zeigt ein Flussdiagramm eines erfindungsgemäßen Verfahrens zur Erzeugung einer GUID. In Schritt 400 erfolgt die Erzeugung einer eineindeutigen Benutzerkennung durch ein Arzt-Computersystem. Diese eineindeutige Benutzerkennung wird einmalig bei der Vergabe einer Patientenkarte, das heißt einer Chipkarte, durch das Computersystem einer Arztpraxis erzeugt und dient daraufhin dazu, einen Patienten über eine entsprechende Kennung eindeutig zu identifizieren.

Um jedoch diese eindeutige Identifizierung zu gewährleisten, muss ein Abgleich mit einer Datenbank stattfinden, in welcher alle bereits erzeugten GUIDs abgespeichert sind. Da eine Abspeicherung von GUIDs in unverschlüsselter Form im Klartext jedoch ein Sicherheitsrisiko darstellt, wird zum Datenabgleich wie folgt vorgegangen: Nach Erzeugung der GUID in Schritt 400 wird diese mit einer Standard-Hash-Funktion (z. B. RIPEMD-256) in einen Hash-Wert umgewandelt. Nach dieser Umwandlung in Schritt 402 wird der Hash-Wert in Schritt 404 an den Datenserver übertragen. Der Datenserver führt dabei eine Tabelle über die Hash-Werte aller bereits vergebenen GUIDs.

Um ein solches Auslesen der GUIDs z. B. durch einen Administrator, zu verhindern, sind in der Tabelle lediglich die Hash-Werte der vergebenen GUIDs gespeichert. Außerdem werden durch Abgleich der Hash-Werte der vergebenen GUIDs Kollisionen der Hash Funktion abgefangen. In Schritt 406 erfolgt eine Überprüfung durch den Server, ob eine solche GUID, bzw. ein entsprechender Hash-Wert an einen Patienten vergeben wurde. Ist dies in Schritt 406 der Fall, so gibt der Server an das Arzt-Informationssystem eine Rückmeldung und das Arzt-Informationssystem erzeugt mit dem Durchlaufen der Schritte 400 bis 406 eine neue GUID. Im Erfolgsfall, das heißt dass eine entsprechende GUID noch nicht vergeben wurde, erfolgt ebenfalls eine entsprechende Meldung an das Arzt-Informationssystem, woraufhin der Hash-Wert der GUID in der Liste auf dem Datenserver gespeichert wird und die gezogene GUID wird in Schritt 408 auf der Chipkarte abgelegt und als eineindeutige Kennung des Patienten verwendet. Durch die Verwendung von ausschließlich dem Hash-Wert der GUID auf dem Datenserver ist ausgeschlossen, dass die GUID zurückgerechnet werden kann.

### Bezugszeichenliste

| | |
|---|---|
| 100 | Computer |
| 102 | Speicher |
| 103 | Daten |
| 104 | Prozessor |
| 106 | Schnittstelle |
| 108 | Computerprogramm |
| 110 | Computerprogramm |
| 112 | Chipkarte |
| 114 | Speicher |
| 116 | Prozessor |
| 118 | Schnittstelle |
| 120 | Parameter |
| 122 | Parameter |
| 124 | Netzwerk |
| 126 | Datenserver |
| 128 | Zeiger |
| 130 | Dateneintrag |
| 132 | Liste |
| 134 | Historientabelle |
| 136 | Datenpaket |
| 138 | GUID-Information |
| 140 | Datenpaket |
| 142 | GUID-Rückmkeldung |

## Patentansprüche

1. Verfahren zur Erzeugung eines ersten Schlüssels zur Verschlüsselung und/oder Entschlüsselung von Daten und eines ersten Zeigers, wobei die Daten auf einem ersten Datenverarbeitungssystem (126) in einem durch den ersten Zeiger identifizierten Speicherbereich (128) verschlüsselt gespeichert und/oder verschlüsselt speicherbar sind, mit den folgenden Schritten:
- rekursive Erzeugung des ersten Schlüssels aus einem zweiten Schlüssel (K₀; 122),
- rekursive Erzeugung des ersten Zeigers aus einem zweiten Zeiger (P₀; 122),
wobei die Anzahl der Rekursionen für die Durchführung der rekursiven Erzeugung des ersten Schlüssels und des ersten Zeigers durch einen Indexwert (i₀; 120) festgelegt ist, wobei die Erzeugung des ersten Schlüssels und die Erzeugung des ersten Zeigers durch einen Prozessor eines tragbaren Datenträgers erfolgt, wobei für neu zu speichernde Daten der Indexwert (i₀;120) um eins erhöht wird und der neue Indexwert (i₀;120) auf dem tragbaren Datenträger (112) gespeichert wird, wobei das Speichern der Daten in dem ersten Datenverarbeitungssystem (126) die folgenden Schritte umfasst:
- Verschlüsseln oder Entschlüsseln der Daten mit dem rekursiv erzeugten ersten Schlüssel durch ein zweites Datenverarbeitungssystem (100),
- Speichern oder Abfragen der verschlüsselten Daten in oder von dem durch den rekursiv erzeugten ersten Zeiger identifizierten Speicherbereich (128) des ersten Datenverarbeitungssystems (126) durch das zweite Datenverarbeitungssystem (100).

2. Verfahren nach Anspruch 1, wobei die rekursive Erzeugung des ersten Schlüssels aus dem zweiten Schlüssel (K₀; 122) und die rekursive Erzeugung des ersten Zeigers aus dem zweiten Zeiger (P₀;122) die folgenden Schritte umfasst:
- Erzeugung des ersten Schlüssels unter Verwendung des zweiten Schlüssels (K₀; 122) und eines dritten Schlüssels (HK_{K};122),
- Erzeugung des ersten Zeigers unter Verwendung des zweiten Zeigers (P₀;122) und eines vierten Schlüssels (HP_{K};122),
sowie den folgenden weiteren Schritten, wobei die weiteren Schritte eine Anzahl oft wiederholt werden, welche dem Indexwert (i₀; 120) entspricht:
- neue Erzeugung des ersten Schlüssels unter Verwendung des zuvor erzeugten ersten Schlüssels und des zweiten Schlüssels (K₀; 122),
- neue Erzeugung des ersten Zeigers unter Verwendung des zuvor erzeugten ersten Zeigers und des vierten Schlüssels (HP_{K}; 122).

3. Verfahren nach Anspruch 2, wobei der Indexwert (i₀; 120) um eins erhöht und
- ein neuer zusätzlicher erster Zeiger aus dem einen Rekursionsschritt zuvor erzeugten ersten Zeiger rekursiv erzeugt wird, wobei der zuvor erzeugte erste Zeiger verworfen wird,
wenn der aus dem einen Rekursionsschritt zuvor erzeugte ersten Schlüssel und erste Zeiger einem in einem beliebigen Rekursionsschritt zuvor erzeugten ersten Zeiger und dem in diesem beliebigen Rekursionsschritt zuvor erzeugten ersten Schlüssel entsprechen.

4. Tragbarer Datenträger (112) mit Prozessor (116) zur Erzeugung eines ersten Schlüssels zur Verschlüsselung und/oder Entschlüsselung von Daten und eines ersten Zeigers, wobei die verschlüsselten Daten auf einem ersten Datenverarbeitungssystem (126) in einem durch den ersten Zeiger identifizierten Speicherbereich (128) gespeichert und/oder speicherbar sind, mit
- Mitteln zur rekursiven Erzeugung des ersten Schlüssels aus einem zweiten Schlüssel (K₀;122),
- Mitteln zur rekursiven Erzeugung des ersten Zeigers aus einem zweiten Zeiger (Po;122),
wobei die Anzahl der Rekursionen für die Durchführung der rekursiven Erzeugung des ersten Schlüssels und des ersten Zeigers durch den Indexwert (i₀; 120) festgelegt ist, wobei für neu zu speichernde Daten der Indexwert (i₀;120) um eins erhöht wird und der neue Indexwert (i₀;120) auf dem tragbaren Datenträger (112) gespeichert wird.

5. Tragbarer Datenträger (112) mit Prozessor (116) nach Anspruch 4, ferner mit Mitteln zur
- Erzeugung des ersten Schlüssels unter Verwendung des zweiten Schlüssels (K₀;122) und eines dritten Schlüssels (HK_{K};122),
- Erzeugung des ersten Zeigers unter Verwendung des zweiten Zeigers (P₀;122) und eines vierten Schlüssels (HP_{K};122),
- neuen Erzeugung des ersten Schlüssels unter Verwendung des zuvor erzeugten ersten Schlüssels und des zweiten Schlüssels (K₀;122),
- neuen Erzeugung des ersten Zeigers unter Verwendung des zuvor erzeugten ersten Zeigers und des vierten Schlüssels (HP_{K};122).

6. Tragbarer Datenträger (112) mit Prozessor (116) nach Anspruch 5, wobei der erste Schlüssel und/oder der erste Zeiger durch die Mittel zur Erzeugung des ersten Schlüssels und/oder den Mitteln zur Erzeugung des ersten Zeigers unter Verwendung einer Hashfunktion erzeugbar sind.

7. Tragbarer Datenträger (112) mit Prozessor (116) nach Anspruch 6, wobei die Daten Patientendaten beinhalten.

8. Tragbarer Datenträger (112) mit Prozessor (116) nach Anspruch 7, wobei die Daten eine eineindeutige Patientenkennung (122) beinhalten.

9. Tragbarer Datenträger (112) mit Prozessor (116) nach einem der vorigen Ansprüche 4 bis 8, wobei der zweite Schlüssel (K₀;122) und der dritte Schlüssel (HK_{K};122) und der vierte Schlüssel (HP_{K};122) und der zweite Zeiger (P₀;122) und der Indexwert (i₀; 120) und die eineindeutige Patientenkennung (GUID; 122) aufgrund einer Personalisierung in einem Speicherbereich (114) des tragbaren Datenträgers (112) gespeichert sind, wobei der Prozessor (116) zur Erzeugung des ersten Schlüssels und/oder des ersten Zeigers ausgebildet ist.

10. Tragbarer Datenträger (112) mit Prozessor (116) nach Anspruch 9, wobei der tragbare Datenträger (112) mit dem Prozessor (116) durch eine Chipkarte ausgebildet ist.

11. Datenverarbeitungsvorrichtung (100) mit Mitteln zur Kommunikation mit einem tragbaren Datenträger (112) mit Prozessor (116) nach einem der vorigen Ansprüche 4 bis 10 mit
- Mitteln zur Zuordnung eines Indexwerts zu den Daten,
- Mitteln (108) zum Verschlüsseln der Daten mit dem rekursiv erzeugten ersten Schlüssel,
- Mittel zum Speichern der verschlüsselten Daten in einem durch den rekursiv erzeugten ersten Zeiger identifizierten Speicherbereich (128) des ersten Datenverarbeitungssystems (126).

12. Datenverarbeitungsvorrichtung nach Anspruch 11, ferner mit:
- Mitteln zum Abfragen der verschlüsselten Daten von einem durch den rekursiv erzeugten ersten Zeiger identifizierten Speicherbereich (128) des ersten Datenverarbeitungssystems (126),
- Mitteln (108) zum Entschlüsseln der verschlüsselten Daten mit dem rekursiv erzeugten ersten Schlüssel.

13. Datenverarbeitungsvorrichtung nach einem der vorigen Ansprüche 11 bis 12, ferner mit Mitteln zum zusätzlichen Speichern von unverschlüsselten Metadaten in dem durch den rekursiv erzeugten ersten Zeiger identifizierten Speicherbereich (128) des ersten Datenverarbeitungssystems (126), wobei die Metadaten mit den Daten verknüpft speicherbar sind.

14. Datenverarbeitungsvorrichtung nach einem der vorigen Ansprüche 11 bis 12, ferner mit Mitteln zum Abfragen der unverschlüsselten Metadaten von einem durch den rekursiv erzeugten ersten Zeiger identifizierten Speicherbereich (128) des ersten Datenverarbeitungssystems (126), wobei die Metadaten unverschlüsselt mit den Daten verknüpft sind.

15. Computerprogrammprodukt (108; 110) mit von einem Prozessor (104) ausführbaren Instruktionen zur Durchführung der Schritte des Verfahrens nach einem der Ansprüche 1 bis 3.

## Claims

1. A method for generating a first key to encode and/or decode data and a first pointer, wherein the data are stored in an encoded form and/or can be stored in an encoded form on a first data processing system (126) in a memory area (128) identified by the first pointer, said method comprising the following steps:
- recursive generation of the first key from a second key (K₀; 122),
- recursive generation of the first pointer from a second pointer (P₀; 122),
wherein the number of recursions for implementing the recursive generation of the first key and of the first pointer is determined by an index value (i₀; 120), wherein the first key and the first pointer are generated by a processor of a portable data carrier, wherein the index value (i₀; 120) is increased by one for data to be newly stored and the new index value (i₀; 120) is stored on the portable data carrier (112), wherein the storing of the data in the first data processing system (126) comprises the following steps:
- encoding or decoding the data with the recursively generated first key by means of a second data processing system (100), and
- storing or querying the encoded data in or by the memory area (128) of the first data processing system (126) by means of the second data processing system (100), said memory area being identified by the recursively generated first pointer.

2. The method according to Claim 1, wherein the recursive generation of the first key from the second key (K₀; 122) and the recursive generation of the first pointer from the second pointer (P₀; 122) comprises the following steps:
- generating the first key with use of the second key (K₀; 122) and of a third key (HK_{K}; 122),
- generating the first pointer with use of the second pointer (P₀; 122) and a fourth key (HP_{K}; 122),
and also□the following additional steps, wherein the additional steps are repeated as frequently as the number that corresponds to the index value (i₀; 122):
- newly generating the first key with use of the previously generated first key and of the second key (K₀; 122),
- newly generating the first pointer with use of the previously generated first pointer and of the fourth key (HP_{K}; 122).

3. The method according to Claim 2, wherein the index value (i₀; 120) is increased by one,
- and□a new additional first pointer is recursively generated from the first pointer generated one recursion step earlier, wherein the earlier generated first pointer is discarded,
when the first key and the first pointer generated from the next previous recursion step correspond to a first pointer previously generated in any recursion step and to the first key generated earlier in said arbitrary recursion step.

4. A portable data carrier (112), comprising□a processor (116) for generating a first key to encode and/or decode data and a first pointer, □wherein the encoded data are stored and/or can be stored on a first data processing system (126) in a memory area (128) identified by the first pointer, comprising
- means for recursive generation of the first key from a second key (K₀; 122),
- means for recursive generation of the first pointer from a second pointer (P₀; 122),
wherein the number of recursions for implementing the recursive generation of the first key and of the first pointer is determined by the index value (i₀; 120), wherein the index value (i₀; 120) is increased by one for data to be newly stored, and the new index value (i₀; 120) is stored on the portable data carrier (112).

5. The portable data carrier (112) comprising a processor (116) according to Claim 4, further comprising means for
- generating the first key with use of the second key (K₀; 122) and of a third key (HK_{K}; 122),
- generating the first pointer with use of the second pointer (P₀; 122) and of a fourth key (HP_{K}; 122),
- newly generating the first key with use of the previously generated first key and of the second key (K₀; 122),
- newly generating the first pointer with use of the previously generated first pointer and of the fourth key (HP_{K}; 122).

6. The portable data carrier (112) comprising a processor (116) according to Claim 5, wherein the first key and/or the first pointer can be generated by the means for generating the first key and/or by the means for generating the first pointer with use of a hash function.

7. The portable data carrier (112) comprising a processor (116) according to Claim 6, wherein the data comprise patient data.

8. The portable data carrier (112) comprising a processor (116) according to Claim 7, wherein the data comprise a one-to-one patient identification (122).

9. The portable data carrier (112) comprising a processor (116) according to one of the preceding Claims 4 to 8, wherein the second key (K₀; 122) and the third key (HK_{K}; 122) and the fourth key (HP_{K}; 122) and the second pointer (P₀; 122) and the index value (i₀; 120) and the one-to-one patient identification (GUID; 122) are stored in a memory area (114) of the portable data carrier (112) on the basis of personalisation, wherein the processor (116) is designed to generate the first key and/or the the first pointer.

10. The portable data carrier (112) comprising a processor (116) according to Claim 9, wherein the portable data carrier (112) comprising the processor (116) is formed by a smart card.

11. A data processing device (100) comprising means for communicating with a portable data carrier (112) according to one of the preceding Claims 4 to 10, comprising
- means for assigning an index value to the data,
- means (108) for encoding the data by means of the recursively generated first key, and
- means for storing the encoded data in a memory area (128) of the first data processing system (126), said memory area being identified by the recursively generated first pointer.

12. The data processing device according to Claim 11, further comprising:
- means for querying the encoded data by a memory area (128) of the first data processing system (126), said memory area being identified by the recursively generated first pointer, and
- means (108) for decoding the encoded data by means of the recursively generated first key.

13. The data processing device according to one of the preceding Claims 11 to 12, further comprising means for additionally storing unencoded metadata in the memory area (128) of the first data processing system (126), said memory area being identified by the recursively generated first pointer, wherein the metadata can be stored in a linked form with the data.

14. The data processing device according to one of the preceding Claims 11 to 12, further comprising means for querying the unencoded metadata by a memory area (128) of the first data processing system (126), said memory area being identified by the recursively generated first pointer, wherein the metadata are linked to the data in an unencoded form.

15. A computer program product (108; 110) comprising instructions executable by a processor (104) for carrying out the steps of the method according to one of Claims 1 to 3.

## Revendications

1. Procédé pour la création d'une première clé pour l'encodage et/ou le décodage de données et d'un premier pointeur, dans lequel les données sont enregistrées de façon codée et/ou peuvent être enregistrées de façon codée dans un premier système de traitement de données (126), dans une zone de stockage (128) identifiée par le premier pointeur, avec les étapes suivantes :
- création récursive de la première clé, à partir d'une deuxième clé (K₀ ; 122),
- création récursive du premier pointeur à partir d'un deuxième pointeur (P₀ ; 122),
dans lequel le nombre de récurrences pour l'exécution de la création récursive de la première clé et du premier pointeur est fixé par une valeur d'indice (I₀ ; 120), dans lequel la création de la première clé et la création du premier pointeur sont effectuées par un processeur d'un support de données portable, dans lequel la valeur d'indice (I₀ ; 120) est augmentée de un pour de nouvelles données à enregistrer, et la nouvelle valeur d'indice (I₀ ; 120) est enregistrée sur le support de données portable (112), dans lequel l'enregistrement des données dans le premier système de traitement de données (126) comprend les étapes suivantes :
- encodage ou décodage des données avec une première clé créée de façon récursive, par un deuxième système de traitement de données (100)
- enregistrement ou extraction de données encodées, par le deuxième système de traitement de données (100), dans ou à partir de la zone de stockage (128) du premier système de traitement de données (126) identifiée par le premier pointeur créé de façon récursive.

2. Procédé selon la revendication 1, dans lequel la création récursive de la première clé à partir de la deuxième clé (K₀ ; 122) et la création récursive du premier pointeur à partir du deuxième pointeur (P₀ ; 122) comprend les étapes suivantes :
- création de la première clé en utilisant la deuxième clé (K₀ ; 122) et une troisième clé (HK_{K} ; 122),
- création du premier pointeur en utilisant le deuxième pointeur (P₀ ; 122) et une quatrième clé (HP_{K} ; 122),
ainsi que les étapes supplémentaires suivantes, où les étapes supplémentaires emploient souvent un nombre correspondant à la valeur d'indice (I₀ ; 120) :
- nouvelle création de la première clé en utilisant la première clé créée précédemment et la deuxième clé (K₀ ; 122),
- nouvelle création du premier pointeur en utilisant le premier pointeur créé précédemment et la quatrième clé (HP_{K} ; 122).

3. Procédé selon la revendication 2, dans lequel la valeur d'indice (I₀ ; 120) est augmentée de un et
- un nouveau premier pointeur supplémentaire est créé à partir du premier pointeur créé à l'étape récursive précédente, le premier pointeur créé précédemment étant détruit,
lorsque la première clé et le premier pointeur créés à l'étape récursive précédente correspondent à un premier pointeur créé antérieurement au cours d'une étape récursive au choix et à la première clé créée au cours de cette étape récursive au choix.

4. Support de données portable (112) avec un processeur (116) pour la création d'une première clé pour l'encodage et/ou le décodage de données et d'un premier pointeur, dans lequel les données encodées sont enregistrées et/ou peuvent être enregistrées dans une zone de stockage (128) identifiée par le premier pointeur, dans un premier système de traitement de données (126), avec
- des moyens pour la création récursive de la première clé à partir d'une deuxième clé (K₀ ; 122),
- des moyens pour la création récursive du premier pointeur à partir d'un deuxième pointeur (P₀ ; 122),
dans lequel le nombre de récurrences pour l'exécution de la création récursive de la première clé et du premier pointeur est fixé par une valeur d'indice (I₀ ; 120), dans lequel la valeur d'indice (I₀ ; 120) est augmentée de un pour de nouvelles données à enregistrer et la nouvelle valeur d'indice (I₀ ; 120) est enregistrée sur le support de données portable (112).

5. Support de données portable (112) avec un processeur (116) selon la revendication 4, comprenant en outre des moyens pour
- la création de la première clé en utilisant la deuxième clé (K₀ ; 122) et une troisième clé (HK_{K} ; 122),
- la création du premier pointeur en utilisant le deuxième pointeur (P₀ ; 122) et une quatrième clé (HP_{K} ; 122),
- la nouvelle création de la première clé en utilisant la première clé créée précédemment et la deuxième clé (K₀ ; 122),
- la nouvelle création du premier pointeur en utilisant le premier pointeur créé précédemment et la quatrième clé (HP_{K} ; 122).

6. Support de données portable (112) avec un processeur (116) selon la revendication 5, dans lequel la première clé et/ou le premier pointeur peuvent être créés par les moyens destinés à la création de la première clé et/ou les moyens destinés à la création du premier pointeur, en utilisant une fonction de hachage.

7. Support de données portable (112) avec un processeur (116) selon la revendication 6, dans lequel les données contiennent des données de patients.

8. Support de données portable (112) avec un processeur (116) selon la revendication 7, dans lequel les données contiennent des identifiants de patients univoques (122).

9. Support de données portable (112) avec un processeur (116) selon l'une des revendications précédentes 4 à 8, dans lequel la deuxième clé (K₀ ; 122) et la troisième clé (HK_{K} ; 122) et la quatrième clé (HP_{K} ; 122) et le deuxième pointeur (P₀ ; 122) et la valeur d' indice (I₀ ; 120) et l'identifiant de patient univoque (GUID ; 122) sont enregistrées dans une zone de stockage (114) du support de données portable (112) en raison d'une personnalisation, le processeur (116) étant conçu pour la création de la première clé et/ou du premier pointeur.

10. Support de données portable (112) avec un processeur (116) selon la revendication 9, dans lequel le support de données portable (112) avec le processeur (116) est constitué d'une carte à puce.

11. Dispositif de traitement de données (100) avec des moyens pour la communication avec un support de données portable (112) avec un processeur (116) selon l'une des revendications précédentes 4 à 10, avec
- des moyens pour attribuer une valeur d'indice aux données,
- des moyens (108) pour encoder les données avec une première clé créée de façon récursive,
- des moyens pour enregistrer les données encodées dans une zone de stockage (128) du premier système de traitement de données (128) identifiée par le premier pointeur créé de façon récursive.

12. Dispositif de traitement de données selon la revendication 11, comprenant en outre :
- des moyens pour extraire des données encodées à partir d'une zone de stockage (128) du premier système de traitement de données (126) identifiée par le premier pointeur créé de façon récursive,
- des moyens (108) pour décoder les données encodées avec la première clé créée de façon récursive.

13. Dispositif de traitement de données selon l'une des revendications précédentes 11 à 12, comprenant en outre des moyens pour l'enregistrement supplémentaire de métadonnées non codées, dans la zone de stockage (128) du premier système de traitement de données (126) identifiée par le premier pointeur créé de façon récursive, les métadonnées pouvant être enregistrées en association avec les données.

14. Dispositif de traitement de données selon l'une des revendications précédentes 11 à 12, comprenant en outre des moyens pour l'extraction des métadonnées non codées, à partir d'une zone de stockage (128) du premier système de traitement de données (126) identifiée par le premier pointeur créé de façon récursive, les métadonnées étant associées aux données sans être codées.

15. Produit de programme informatique (108 ; 110) avec des instructions exécutables par un processeur (104), pour l'exécution des étapes du procédé selon l'une des revendications 1 à 3.
